# EUROPEAN PATENT SPECIFICATION

(11) **EP 3 166 853 B1**
(45) Date of publication and mention of the grant of the patent: **13.06.2018**
(21) Application number: 15753202.9
(22) Date of filing: 09.07.2015
(51) Int. Cl.: B65B 29/02, A47J 31/06, B65D 85/804, B65B 7/28, B65B 67/02

(54) **COFFEE CUP AND METHOD AND DEVICE FOR MAKING A COFFEE CUP**
KAFFEEBECHER UND VERFAHREN UND VORRICHTUNG ZUR HERSTELLUNG EINER KAFFEEBECHERS
TASSE À CAFÉ AINSI QUE PROCÉDÉ ET DISPOSITIF POUR FABRIQUER UNE TASSE À CAFÉ

(30) Priority: 10.07.2014 NL 2013164
(43) Date of publication of application: 17.05.2017
(73) Proprietor: Bluecup B.V., 3641 ED Mijdrecht (NL)
(72) Inventor: VAN DER VLIET, Ab, NL-1831 BA Koedijk (NL); DE RIJK, Rob, NL-1244 PK Ankeveen (NL)
(74) Representative: EP&C
(86) International application number: PCT/NL2015/050500
(87) International publication number: WO 2016/007006

(56) References cited:
- DE-A1- 3 337 683
- DE-A1-102010 027 484
- FR-A1- 2 970 242
- FR-A1- 2 973 209
- FR-A1- 2 993 869
- US-A1- 2005 217 213
- US-A1- 2006 021 930

## Description

### Field of the invention

The present invention relates to a kit-of-parts which together form a coffee cup, and to a method and device for making such a coffee cup by securing a cover onto a cup part, thereby forming the coffee cup.

### Background of the invention

Coffee cups filled with ground coffee have become a very popular way of making coffee. Such coffee cups are known by the popular name "Nespresso" and are disclosed amongst others on www.nespresso.com. The cups are used in combination with a dedicated coffee machine. These coffee machines also have become a common household product. The coffee machines require coffee cups of a certain standard size. However, some degree of freedom in the size and shape of the coffee cups is allowed by the coffee machines. Various suppliers have developed coffee cups and currently supply these coffee cups to the market.

A large number of patent documents disclose the coffee cups. These include for instance US5656311. Other patent documents such as EP2103236 disclose the coffee machines which are used to extract coffee from the cups.

A disadvantage of the known coffee cups is that a relatively large quantity of packaging material is required to produce a single cup of coffee. This packaging material generally ends up in the waste bin, which is not very environmental friendly.

The known coffee cups have another disadvantage of a relatively high price. The relatively high price is associated with the nature of the coffee cups. The coffee cups are individual capsules, containing coffee for a single cup. The coffee cups can only be used once and must be discarded after only a single use.

Some manufacturers of coffee cups have tried to provide an alternative coffee cup which allows re-use of parts of the cup or even the whole cup. Such coffee cups are sometimes indicated as reusable coffee cups. These solutions generally create less waste material and are more environmental friendly. However, it was found that these coffee cups generally do not result in a satisfactory product, in particular because of unreliable behaviour of the cups in the coffee machines. In particular, the known reusable coffee cups do not produce a high and constant quality of coffee. For these reasons, do-it-yourself coffee cups have not gained much popularity until now.

The coffee cups need to comply with many different requirements, including but not limited to:
- non-leakage in the coffee machine,
- user friendliness including a simple and fast way of making the cups,
- sufficiently strong to resist the operating pressures of more than 15 bar,
- sufficiently strong to be used multiple times,
- reliability,
- a high and constant quality of the coffee,
- free of any toxic materials,
- cost-effectiveness,
- no cup material coming loose,
- a substantial reduction in waste material in comparison with the complete ready-to serve cups available on the market.

All in all, it has been found quite difficult to develop do-it-yourself coffee cups which comply with all these requirements.

Document FR2970242A1 discloses a cover according to the preamble of claim 1.

Document DE3337683A1 discloses a device for securing a cover according to the preamble of claim 11.

### Object of the invention

It is an object of the present invention to provide a kit-of-parts for a user friendly coffee cup which is compliant with the known coffee machines, which is at least partially reusable, which can be filled and closed in a simple and fast manner by an ordinary consumer, which results in a high and constant quality of the coffee, is cost-effective and generally complies with all requirements for coffee cups listed above.

It is a further object of the invention to provide an alternative coffee cup.

It is a further object to provide a method and device with which a user, in particular a consumer, can fill and make reusable coffee cups at home in a simple and fast manner and make coffee of a high and constant quality in a cost-effective and a relatively environmentally friendly manner with these coffee cups.

### The invention

In order to achieve at least one object, the invention provides a cover according to claim 1 and a kit-of-parts according to claim 4. The present invention provides an easy to use coffee cup which allows re-use of the cup part. The coffee cup can is both cost-effective and environmentally friendly. Moreover, users can simply vary the kind of coffee which is made by filling the cups with different kinds of coffee. The resilient sealing material is a different material than the material of the body of the cup part.

In an embodiment, the cover is manufactured from a single circular piece of aluminium sheet material, in particular without any additional parts or materials, wherein the skirt is formed by bending said circular piece along a circular bending line, and wherein the beaded edge is formed by an outer zone of said circular piece being rolled onto itself, wherein the rolling and the bending have an opposite curvature.

It was found that this is a very simple cover for the coffee cup, which can be easily produced and results in little waste material. No glue or other connection means are required in order to secure the cover on the cup part.

In an embodiment, the cup part comprises a groove in the bottom wall which is constructed to let the bottom wall stay clear of a puncturing member of a coffee machine which is constructed to puncture the bottom wall of a different kind of coffee cup which is usable in combination with the coffee machine. In this way, damage to the cup part is avoided. Consequently, the cup part can be used multiple times.

In an embodiment, a circular groove is provided in the upper surface of the coffee cup, wherein the circular groove houses a base part of the sealing ring. The sealing ring advantageously seals the volume V inside the dup from the outside.

In an embodiment, the outer edge of the flange has a thickness of 0.7 - 0.8 mm and the skirt has a length of 0.8 - 0.9 mm.

In an embodiment, the cup part comprises an annular recess in the circumferential side wall in a region where the circumferential side wall meets the flange, wherein a second sealing ring of a resilient material is provided in said region, the second sealing ring extending around the cup part in said recess and also protruding outside said recess, wherein the second sealing ring contacts both the underside of the flange and the circumferential side wall, wherein the second sealing ring defines an annular abutment surface configured to engage an annular support ridge of a device for securing the cover on the cup part of the coffee cup.

The second sealing ring prevents leakage of water around the coffee cup during the making of the coffee in the coffee machine.

The second sealing ring further allows a stable support of the cup part in a cup part holder of a device for forming the coffee cup.

In another embodiment, the annular abutment surface which is defined by the second sealing ring extends transverse to a main axis of the cup part. The annular abutment surface may have a concave inner section.

In another embodiment, the annular abutment surface which is defined by the second sealing ring is conical with respect to a main axis of the cup part and in particular extends at an angle of 5 - 20 degrees to a plane which is normal to a main axis of the cup part.

In an embodiment, the flange of the cup part comprises a tapering end portion which defines an underside which is conical with respect to a main axis of the cup part and in particular extends at an angle of 5 - 20 degrees to a plane normal to the main axis.

In an embodiment, the first sealing ring and the second sealing ring are interconnected via channels which extend through the cup part, wherein said channels are filled with the same resilient material as the material of the first sealing ring and the second sealing ring.

In an embodiment, the cover is manufactured from a piece of aluminium sheet material and the cup part is manufactured from plastic. This combination was found to work very well in practice.

In an embodiment, the skirt extends substantially perpendicular to the central portion of the cover. This allows a proper fit of the cover onto the cup part.

In an embodiment, a diameter of the beaded edge is between 80 and 120 percent of the skirt length. In an embodiment, the beaded edge has a diameter of 0.6 - 1.2 mm. It was found that this configuration of the beaded edge creates a secure and reliable connection for the cover onto the cup part.

In an embodiment, the beaded edge is partly filled with air. This allows a deforming of the beaded edge for the secure connection.

In an embodiment, the flange has a diameter of 36.9 - 37.1 mm and wherein the beaded edge defines an access diameter which is 0.1 - 1.0 mm larger than the diameter of the flange. This feature makes it relatively easy for the user to position the cover onto the cup part.

In an embodiment, the cup part and the cover are constructed and arranged to be joined by the device according to the invention after being filled with coffee.

The present invention further relates to a device according to claim 11. With the device according to the invention, a user can advantageously and in a simple manner secure the cover onto the cup part. The resulting coffee cup complies with the requirements for such a cup which are discussed above.

The device for securing the cover on the cup part on the one hand and the kit-of-parts on the other hand are complementary, because the device for securing the cover on the cup part is used to form the coffee cup. The device bends the beaded edge around the flange of the cup part and subsequently flattens the beaded edge against the underside of the flange, thereby securing the cover on the cup part.

The device for securing the cover on the cup part and the kit-of-parts are also linked to one another via the method of making the coffee cup. The method requires both the kit-of-parts and the device for securing the cover on the cup part. Therefore the kit-of-parts and the device for securing the cover on the cup part form interrelated products similar to a plug and socket or a transmitter and receiver. The device for securing the cover on the cup part on the one hand and the kit-of-parts on the other hand form a group of inventions based on a single general, unifying inventive concept of enabling a user to fill and make a coffee cup himself.

In an embodiment of the device, the beaded edge holding wall comprises a conical lower part and an upper part having a substantially uniform diameter, the conical lower part having a tapering angle (α) of between 1 and 10 degrees and going over in the upper part wherein the conical lower part acts as a guide for guiding the cover into the upper part and toward the central support surface, the conical lower part being constructed for gradually deforming the skirt by pressing the beaded edge inwardly during the movement of the cover into the cavity and toward the central support surface.

Advantageously, the beaded edge holding wall assists in the deformation of the cover.

In an embodiment of the device, the cavity of the upper part has a diameter which is slightly smaller than the diameter of the cover in a non-deformed state. This configuration helps in the bending of the skirt around the outer edge of the flange.

In an embodiment of the device, the deformer is integral with a base section of the lower part and wherein the cup part holder is movable relative to said base section in the direction of the main axis, wherein the cup part holder is connected to the base section via a sliding coupling and a spring, wherein the cup part holder is movable against the action of the spring from the first position to the second position.

In an embodiment, the device is a hand held device, the lower part being configured to be held by one hand of a user and the top part being configured to be held by the other hand of the user. This was found to be a very practical embodiment.

In an embodiment of the device, the lower part is separate from the top part.

In an embodiment of the device, the top part comprises an ejection mechanism operable by an operating member, in particular a button, the ejection mechanism comprising an ejection member which is movable relative to the circumferential cover holding wall in the direction of the main axis by the operating member, the ejection member being constructed to eject the coffee cup from the top part after the cover has been secured onto the cup part.

The ejection mechanism has the advantage that a cup part, once formed, can be released with ease from the device.

In an embodiment of the device, the force mechanism comprises a helical cam track and a cam allowing the top part and the lower part to be coupled to one another by a rotation during the coffee cup forming process, wherein in the first deforming step the top part moves downward onto the lower part, thereby pressing the beaded edge inward, and wherein in the second deforming step the cam moves through the helical cam track in a first direction and the top part and the lower part are rotated relative to one another and move toward one another as a result of the pitch of the cam track, wherein the annular deforming ridge is firmly pressed against the underside of the flange and wherein the beaded edge is flattened between the annular deforming ridge and the underside of the flange.

The helical cam track is provided on the top part and the cam is provided on the bottom part, but this may also be reversed. The helical cam track does not extend fully around the top part or bottom part but only partially over a relatively short length.,

Advantageously, the helical cam track and cam allow the exertion of sufficient force to secure the cover onto the cup part with relative ease of use.

In an embodiment of the device, in a first rotation direction the top part moves toward the lower part for securing the cover onto the cup part and wherein in a second opposite rotation direction the top part moves away from the lower part for releasing the formed coffee cup.

The present invention further relates to a method of making a completed coffee cup, according to claim 14. In an embodiment of the method, the cover is secured onto the cup part without the use of any glue or adhesive tape or separate filter paper. In contrast to many known cups, glue is not required, which makes the coffee cups easy to re-use. It is described a completed coffee cup comprising a cup part and a cover which is secured onto the cup part, the cup part comprising:
- a bottom wall and a circumferential side wall in the form of a truncated cone which defines a main axis, the circumferential side wall extending from the bottom wall, the bottom wall and the circumferential side wall defining a volume which holds ground coffee, the cup part having an upper opening, the bottom wall being provided with a plurality of holes via which a hot fluid under pressure can enter the coffee cup,
- a circular flange extending outwardly from an upper end of the side wall, the flange having an outer edge having a thickness,
- a circular sealing ring of a resilient sealing material which extends around the upper opening and protrudes over a distance above an upper side of the cup part, the sealing ring being configured to form a seal between the cover and the cup part when the cover and the cup part are joined together,
the cover comprising:
- a substantially flat circular central portion which engages the upper surface of the cup part and covers the upper opening, the cover being configured for tearing when the coffee cup is being filled, the central portion engaging the sealing ring,
- a skirt extending downwardly from the circumference of the central portion, the skirt being bent around the outer edge of the flange,
- a flattened beaded edge which defines the end of the skirt, the beaded edge being flattened against the underside of the flange and forming a secure connection with the cup part.

In an embodiment of the coffee cup, the cover is manufactured from a single circular piece of aluminium sheet material, in particular without any additional parts or materials, wherein the skirt is formed by bending said circular piece along a circular bending line, and wherein the flattened beaded edge is formed by an outer zone of said circular piece being rolled onto itself, wherein the rolling and the bending have an opposite curvature.

In an embodiment of the coffee cup, the cup part comprises a groove in the bottom wall which is constructed to let the bottom wall stay clear of a puncturing member of a coffee machine which is constructed to puncture the bottom wall of a different kind of coffee cup which is usable in combination with the coffee machine.

In an embodiment of the coffee cup, a circular groove is provided in the upper surface of the coffee cup, wherein the circular groove houses a base part of the sealing ring.

In an embodiment of the coffee cup, the outer edge of the flange has a thickness of 0.7 - 0.8 mm and the skirt has a length of 0.8 - 0.9 mm.

In an embodiment of the coffee cup, the cup part comprises an annular recess in the circumferential side wall in a region where the circumferential side wall meets the flange, wherein a second sealing ring of a resilient material is provided in said region, the second sealing ring extending around the cup part in said recess and also protruding outside said recess, wherein the second sealing ring contacts both the underside of the flange and the circumferential side wall, wherein the second sealing ring defines an annular abutment surface configured to engage an annular support ridge of a device for securing the cover on the cup part of the coffee cup.

In an embodiment of the coffee cup, the first sealing ring and the second sealing ring are interconnected via channels which extend through the cup part, wherein said channels are filled with the same resilient material as the material of the first sealing ring and the second sealing ring.

In an embodiment, the base part of the first sealing ring has a width which is 40 - 60 percent of a total width of the flange.

In an embodiment, the channels have a diameter which is 30 - 80 percent of a width of the first sealing ring.

In an embodiment, the cup part has 6-10 holes in the bottom for the ingress of water.

In an embodiment, the first and second sealing ring have a substantially same width.

In an embodiment of the coffee cup, the cover is manufactured from a piece of aluminium sheet material and the cup part is manufactured from plastic.

In an embodiment of the coffee cup, the cover is secured onto the cup part without the use of any glue or adhesive tape or separate filter paper. It is described a cup part configured to form a coffee cup together with a cover, the cup part comprising:
- a bottom wall and a circumferential side wall in the form of a truncated cone which defines a main axis, the circumferential side wall extending from the bottom wall, the bottom wall and the circumferential side wall defining a volume for holding ground coffee and an upper opening of the cup part, the bottom wall being provided with a plurality of holes via which a hot fluid under pressure can enter the coffee cup,
- a circular flange extending outwardly from an upper end of the side wall, the flange having an outer edge,
- a circular sealing ring of a resilient sealing material which extends around the upper opening and protrudes over a distance above an upper side of the cup part, the sealing ring being configured to form a seal between the cover and the cup part when the cover and the cup part are joined together. It is described a method of manufacturing a cup part, the method comprising:
- providing a mould,
- injecting a first quantity of a molten thermoplastic material into the mould in a first shot,
- cooling and hardening the thermoplastic material, wherein the cup part without any sealing rings is formed, the cup part comprising:
   - a bottom wall and a circumferential side wall in the form of a truncated cone which defines a main axis, the circumferential side wall extending from the bottom wall, the bottom wall and the circumferential side wall defining a volume for holding ground coffee and an upper opening of the cup part, the bottom wall being provided with a plurality of holes via which a hot fluid under pressure can enter the coffee cup,
   - a circular flange extending outwardly from an upper end of the side wall, the flange having an outer edge,
- after the hardening, injecting a quantity of a molten resilient sealing material into the mould in a second shot for forming the first sealing ring and the second sealing ring, wherein the molten elastic materials flows through channels which extend through the formed flange from a groove in the upper side of the flange to the underside of the flange.

A method of injection moulding involving multiple shots is in itself known as multi-shot injection moulding and often referred to a 2-shot injection moulding.

In the method, the sealing rings are formed in a very efficient and reliable way. The aspects of the invention will be more readily appreciated as the same becomes better understood by reference to the following detailed description and considered in connection with the accompanying drawings in which like reference symbols designate like parts.

### Brief description of the figures

Figure 1 shows an isometric view of a cup part of a coffee cup.
Figure 2 shows another isometric view of a cup part of a coffee cup.
Figure 3 shows a side view of a cup part of a coffee cup.
Figure 4 shows a sectional side view of a cup part of a coffee cup.
Figure 5 shows a sectional side view of a detail of a bottom wall of a cup part.
Figure 6 shows a sectional side view of a detail of a flange of a cup part.
Figure 7 shows a partial bottom view of a cup part.
Figure 8 shows a sectional side view of the cover according to the invention.
Figure 9 shows a side view of the cover according to the invention.
Figure 10 shows a top view of the cover according to the invention.
Figure 11 shows a top view of a piece of sheet material from which the cover is made.
Figure 12 shows an isometric view of a device for securing a cover on a cup part according to the invention.
Figure 13 shows a side view of the device for securing a cover on a cup part according to the invention.
Figure 14 shows a top view of the device for securing a cover on a cup part according to the invention.
Figure 15 shows an isometric exploded view of the device for securing a cover on a cup part according to the invention.
Figure 16 shows a sectional side view of the device for securing a cover on a cup part according to the invention.
Figure 17A shows a partial enlarged side view of a step in a method of forming a coffee cup.
Figure 17B shows a diagrammatic partial enlarged side view of a step in a method of forming a coffee cup.
Figure 17C shows a diagrammatic partial enlarged side view of a first deforming step in a method of forming a coffee cup.
Figure 17D shows a diagrammatic partial enlarged side view of a second deforming step in a method of forming a coffee cup.
Figure 18 shows an isometric view of another embodiment of a cup according to the invention with a cut out part.
Figure 19 shows an isometric view of a detail of the embodiment of figure 18 with a cut out part showing a cross-section of the flange at a channel.
Figure 20 shows an isometric view of a bottom side of the embodiment of the cup part of figures 18 and 19 with cut out part.

### Detailed description of the figures

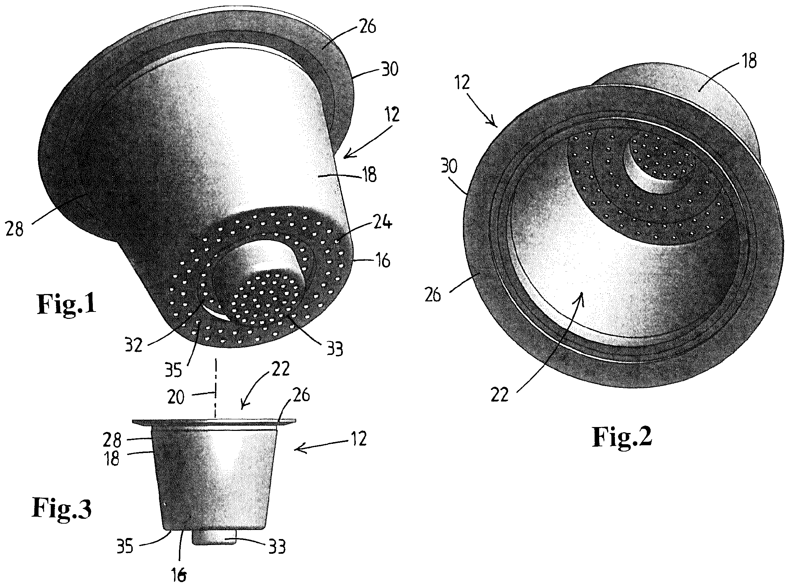

Turning to figures 1 - 7, a cup part 12 is shown for a kit-of-parts of a cup part 12 and a separate cover 14 which together form a coffee cup 11. The cover 14 is discussed further below.

The cup part 12 is generally manufactured from plastic, but another material may also be used.

The cup part 12 comprises a bottom wall 16 and a circumferential side wall 18 in the form of a truncated cone which defines a main axis 20. A large part of the circumferential side wall is conical, but not an upper part.

An upper side of the cup has a larger diameter than the lower side. The circumferential side wall extends from the bottom wall 16. The bottom wall and the circumferential side wall define a volume V for holding ground coffee. The cup part 12 has an upper opening 22. The bottom wall is provided with a plurality of holes 24 via which a hot fluid under pressure can enter the coffee cup.

The cup part 12 comprises a circular flange 26 which extends outwardly from an upper end 28 of the side wall 18. The flange 26 has an outer edge 30. The bottom wall, circumferential wall and flange form the body of the cup part.

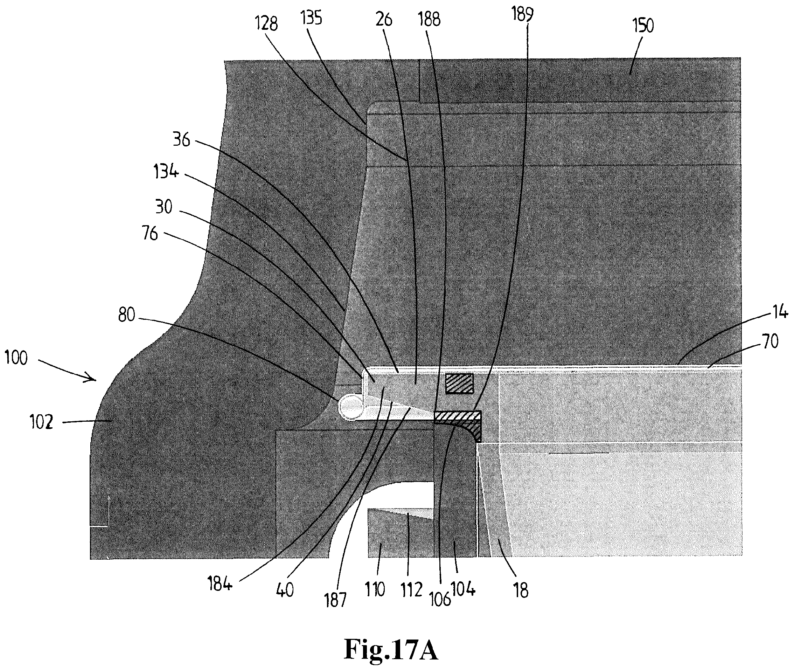

The cup part comprises a first circular sealing ring 160 (shown in figures 17A-17D) of a resilient sealing material, typically rubber, which extends around the upper opening and protrudes over a distance above an upper side of the cup part. The first sealing ring is configured to form a seal between the cover and the cup part when the cover and the cup part are joined together.

The cup part comprises a groove 32 in the bottom wall 16 which is constructed to let the bottom wall stay clear of a puncturing member of a coffee machine which is constructed to puncture the bottom wall of a different kind of coffee cup which is usable in combination with the coffee machine. The groove extends around a protruding part 33 of the bottom wall. The protruding part protrudes beyond an outer part 35 of the bottom wall 16. The protruding part 33 forms a central section 60 of the bottom wall.

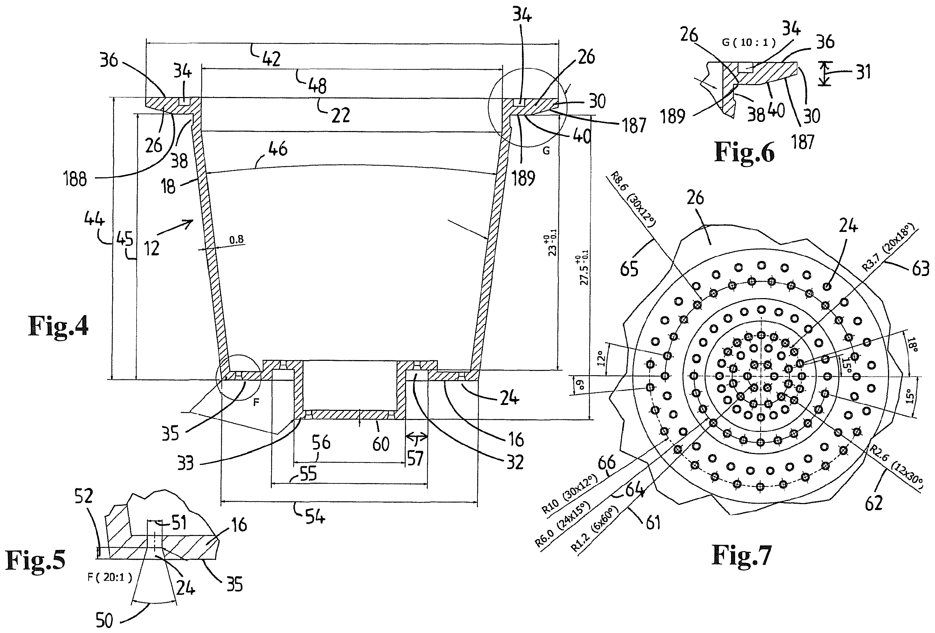

Turning in particular to figures 4 and 6, a circular groove 34 is provided in the upper surface 36 of the coffee cup. The circular groove houses a base part 162 of the first sealing ring 160. The upper surface of the cup part 12 is substantially flat, except for the first sealing ring. The groove may have a substantially square or rectangular cross-section, but another cross-section is also possible.

The sealing ring may have a base part 162 which has a same cross sectional shape as the groove. The sealing ring may have an upper part 164 which is elevated above the upper surface of the base part and which has a convex upper surface or has a substantially triangular shape when seen in cross-section.

If the elevated part of the sealing ring has a substantially triangular shape, it may be an isosceles triangle having an apex angle in the range of 45 - 135 degrees.

The groove 34 may be 0.5 -1 mm wide and may be 0.5 -1 mm deep.

The upper part may extend 0.3 - 0.8 mm above the upper surface 36 of the cup part.

The cup part 12 comprises an annular recess 38 in the circumferential side wall 18 in a region where the circumferential side wall 18 meets the flange 26. A second sealing ring 170 (shown in figs. 17A - 17D) of a resilient material is provided in said region. The second sealing ring extends around the cup part 12 in said recess, and also protrudes from said recess.

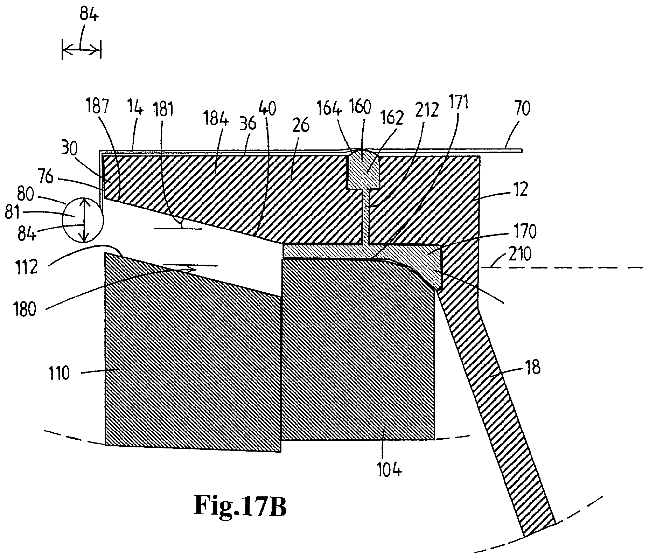

The first sealing ring and the second sealing ring are interconnected via channels 212 (shown in figure 17B) which extend through the cup part 12. These channels are filled with the same resilient material as the material of the first sealing ring and the second sealing ring. The channels facilitate the manufacturing process of the cup wherein a multiple-shot injection moulding process may be used.

The first sealing ring 160 may be located directly above the second sealing ring 170. In this way the channels are short.

Turning to figure 6, the outer edge 30 of the flange has a thickness (or height) 31 of 0.7 - 0.8 mm. The flange has an inner portion having a substantially uniform thickness. The flange 26 has an outer portion having a thickness which gradually decreases in the outer direction, resulting in the thickness 31 at the outer edge. The outer portion is also referred to as a tapering portion 184 of the flange 26 (indicated in figure 17B). The underside 187 of the tapering end portion 184 is conical with respect to the main axis 20 of the cup

The flange has a diameter 42 of between 36.9 and 37.1 mm, in particular 37 mm. A distance 44 between the outer portion 35 of the bottom wall 16 and the upper surface 36 of the cup part is 25.5 mm. A distance 45 between the outer portion 35 of the bottom wall 16 and underside 40 of the flange 26 is 23.9 - 24.1 mm.

The underside 40 is divided in a horizontal inner part 189 and a conical outer part 187.

An angle 46 of the conical side wall 18 is 14.25 degrees. A thickness 49 of the side wall 18 is 0.8mm. The inner diameter 48 of the upper opening 22 is 27 mm.

The bottom wall has a diameter 54 of about 23 mm. The groove 32 in the bottom wall has an outer diameter 55 of about 14 mm, an inner diameter of about 10 mm and a width 57 of about 2 mm.

Turning to figure 5, the holes 24 have a diameter 51 of 0.5 mm at the top. The holes have a tapering lower section having a height 52 which tapers outwardly at an angle 50 of 20-40 degrees. The total number of holes 24 is between 110 and 140, in particular 122 holes.

Turning to figure 7, the central section 60 of the bottom wall comprises three rings of holes 24. The groove 32 in the bottom wall comprises another ring 64 of holes 24. The outer part 35 of the bottom wall comprises two further rings 65, 66 of holes 24.

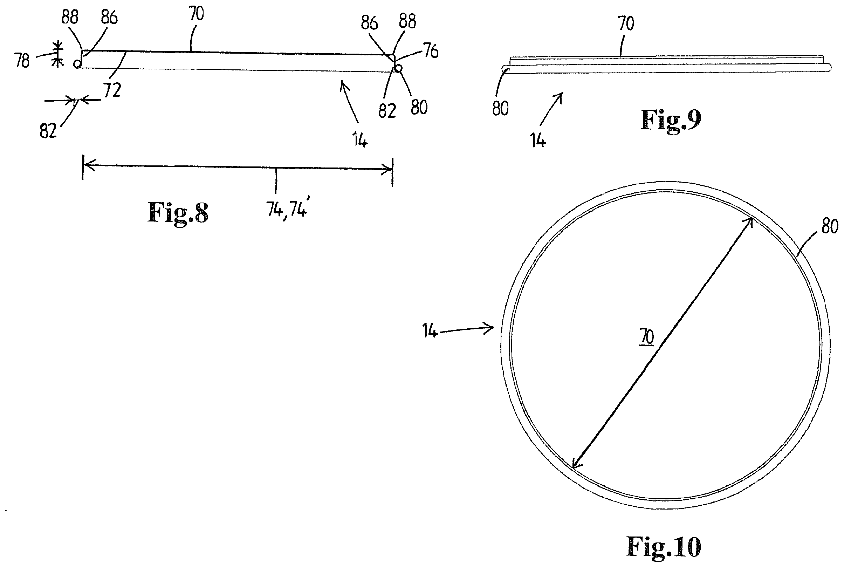

Turning to figures 8, 9 and 10, the cover 14 is shown. The cover 14 comprises a substantially flat circular central portion 70. The cover 14 is a separate item and is not connected to the cup part via a hinge as is known from other do-it-yourself coffee cups

The central portion is configured to engage the upper surface 36 of the cup part 12. The central portion is configured to cover the upper opening 22 of the cup part. Obviously it will be the underside 72 of the central portion 70 which contacts the cup part 12. The cover 14 is configured for tearing when the coffee cup is being filled with fluid under pressure.

The cover 14 has a skirt 76 which extends downwards from the circumference of the central portion 70. The underside 72 of the central portion 70 has a diameter 74 which is defined by the skirt 76.

The skirt has a skirt length 78. The skirt length 78 is larger than the thickness 31 of the outer edge 30 of the flange (see figure 6). The skirt length is slightly larger than the thickness 31 of the outer edge and is about 0.8 to 1.1 mm, preferably about 0.9 mm. The skirt is configured to be bent around the outer edge of the flange.

A beaded edge 80 defines the end 82 of the skirt. The beaded edge 80 of the cover 14 extends outwardly from the skirt over a distance 84. This distance 84 is also the diameter of the beaded edge. The distance is approximately 0.6 - 1.2 mm. The distance (or diameter) 84 of the beaded edge may be between 80 and 120 percent of the skirt length. The beaded edge 80 may have a cavity 81 (indicated in figure 17B) which is filled with air. The cavity 81 may be ring shaped.

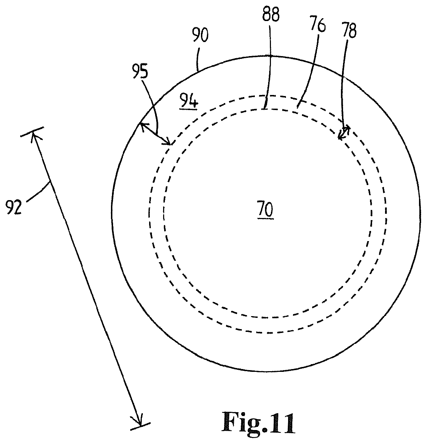

The beaded edge may have a circular cross-section. This was found to be a practical shape of the cross-section because it can be created by rolling as is explained in connection with figure 11.

The beaded edge 80 does not extend inwardly from the skirt. In this way, a free access is provided for the upper surface 36 of the cup part to engage the underside 72 of the central portion 70 of the cover 14. The outer edge 30 of the flange will contact the inner side 86 of the skirt. The upper surface 36 of the cup part 12 will contact the corner 88 where the underside 72 of the central portion meets the inner side 86 of the skirt.

The skirt 76 extends substantially perpendicular to the central portion 70 of the cover, but may taper outwardly over an angle of about 1 - 3 degrees. In this way, the beaded edge defines an access diameter 74' which is 0.1 - 1.0 mm larger than the diameter 74 of the underside of the central portion and 0.1 - 1.0 mm larger than the diameter 42 of the flange.

The beaded edge 80 is configured to be deformed against an underside 40 of the flange 26 of the cup part 12 in order to secure the cover onto the cup part and form the coffee cup.

Figure 10 shows that the beaded edge has a circular form when seen in top view. It is this circular form to which claim 1 relates.

Turning to figure 11, the cover 14 may be manufactured from a single circular piece 90 of aluminium sheet material. The piece 90 has a diameter 92 which may be between 45 - 55 mm, in particular 50 mm. The thickness of the aluminium sheet is typically between 0.025 and 0.035 mm, more in particular 0.032mm.

The cover may be manufactured without any additional parts or materials, i.e. only from the single circular piece 90 of sheet material.

When the cover is manufactured, the skirt 76 is formed by bending said circular piece along a circular bending line 88 which is also the corner 88 shown in figure 8. The beaded edge is formed by an outer zone 94 of said circular piece being rolled onto itself. The rolling and the bending have an opposite curvature, i.e. the bending along the line 88 is performed in the opposite direction as the rolling onto itself. This results in a form wherein the beaded edge 80 extends outwardly as shown in figure 8.

Obviously, the bending about line 88 may be performed before or after the rolling onto itself. The rolling region 94 has a width 95 of about 2 - 5 mm.

The cup part 12 and the cover 14 initially are separate items, This allows the cup part to be filled with ground coffee by a user prior to the securing of the cover onto the cup part.

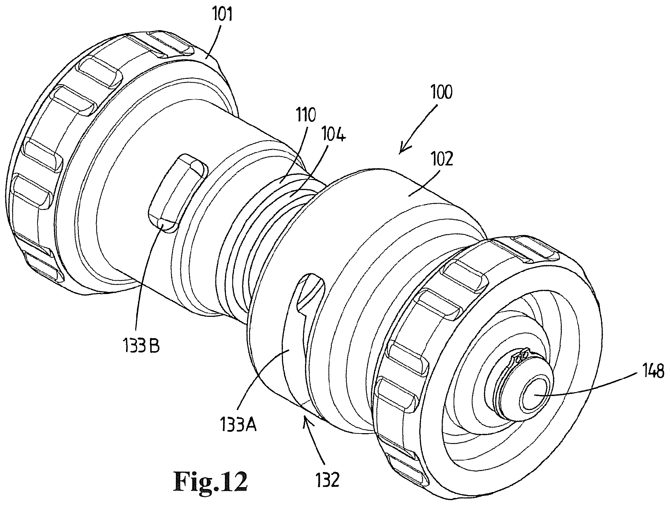

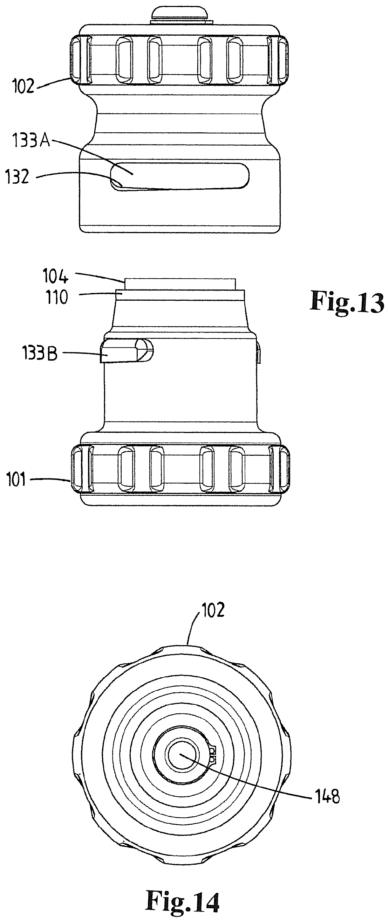

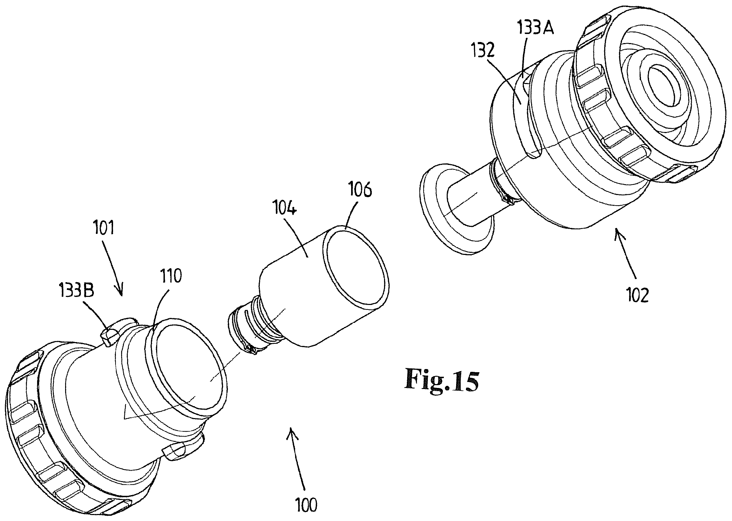

Turning to figures 12, 13,14, 15 and 16, a device 100 for securing a cover 14 on a cup part 12 is shown. The device 100 comprises a lower part 101 and a top part 102. The lower part and the top part are movable relative to one another, and in this embodiment are separate objects. The device 100 is a hand held device. The lower part 101 is configured to be held by one hand of a user and the top part 102 is configured to be held by the other hand of the user. The lower part is separate from the top part.

The lower part 101 comprises a cup part holder 104 which is configured for holding a cup part 12. The cup part holder 104 has an annular support ridge 106 which is configured to abut the underside 40 of the flange 26 of the cup part 12. The annular support ridge is in particular configured to abut an annular abutment surface defined by a second sealing ring of the cup part.

The cup part holder 104 defines a main axis 108. This is also the main axis of the entire device 100. The cup part holder is a body having a cylindrical shape.

The lower part 101 further comprises a deformer 110 for deforming the beaded edge 80 of the cover 14. This deforming action is carried out in a second deforming step. The first deforming step will be discussed further below. The deformer 110 comprising an annular deforming ridge 112 which - when viewed in the direction of the main axis 108 - extends around the annular support ridge 106 and is coaxial with said annular support ridge. The deformer is a tubular body.

The deforming ridge 112 extends at an angle 180 to a plane which extends perpendicular to the main axis. The angle 180 corresponds to an angle 181 of the tapering end portion 184 of the flange 26 with said plane. The deforming ridge 112 has a same outer diameter as the diameter of the flange 26. The deforming ridge 112 has a same width as the underside 187 of the tapering end portion. The deforming ridge 112 has a same inner diameter as the diameter of a transition 188 between the underside 187 of the tapering end portion and a substantially horizontal part 189 of the underside of the flange.

The annular support ridge 106 and the deforming ridge 112 are conical with respect to the main axis 108.

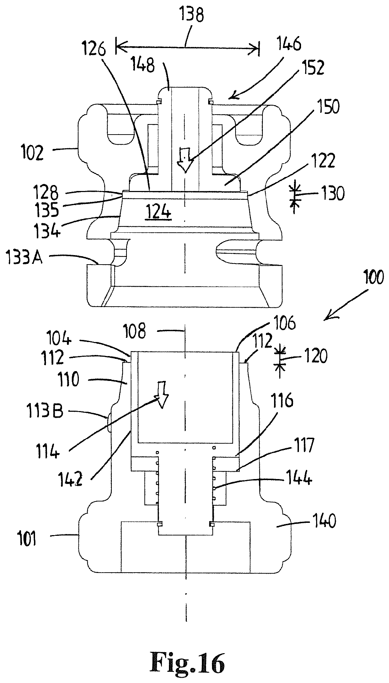

The cup part holder 104 is movable relative to the deformer 110 in the direction 114 of the main axis from a first position 116 to a second position 117 shown in figure 16. The second position 117 is the flattening position. In the first position the annular support ridge 106 is located at a distance 120 above the annular deforming ridge 112.

In the second position the annular support ridge 106 is substantially flush with the annular deforming ridge 112. In the second position the annular deforming ridge bears a force exerted on the cover 14 by the top part 102.

The top part 102 is constructed to be positioned on the lower part 101 and over a cover 14 after a cup part 12 filled with ground coffee is positioned in the cup part holder 104 and after the cover 14 is positioned on the cup part.

The top part comprises a cover holder 122 which defines a cavity 124. The cover holder 122 comprising a circular central support surface 126 and a circumferential beaded edge holding wall 128 which extends downwards from the circular central support surface 126 over a holding distance 130. The circumferential beaded edge holding wall 128 extends about the main axis 108.

The beaded edge holding wall 128 is configured to be positioned around the cover 14 which is positioned on the upper surface 36 of a cup part which is positioned in the cup part holder. The beaded edge holding wall 128 is configured to deform the cover in a first deforming step by bending the skirt 76 of the cover inwardly toward the main axis 108 around the outer edge 30 of the flange 26.

The beaded edge 80 is bent inwardly to a position underneath the flange 26 of the cup part 12. The beaded edge holding wall 128 is configured for preventing the beaded edge 80 from moving back outwardly during the second deforming step.

The device 100 further comprises a force mechanism 132 for forcefully pressing the top part 102 against the cup part 12 and the cover 14 which are supported by the lower part 101. In this way the cup part holder 104 is moved relative to the deformer 110 and the annular deforming ridge 112 is pressed against the underside 40 of the flange of the cup part, thereby flattening the beaded edge 80. The beaded edge 80 is present between the annular deforming ridge 112 and the flange 26 when the cover is secured onto the cup part.

The force mechanism comprises a helical cam track 133A, and a cam 133B which allows the top part 102 and the lower part 101 to be coupled to one another by a rotation during the coffee cup forming process. The device comprises two helical cam tracks 133A and two cams 133B. In a first rotation direction the top part 102 moves toward the lower part 101 for securing the cover onto the cup part as a result of a pitch of the cam track and in a second, opposite rotation direction the top part moves away from the lower part for releasing the formed coffee cup, also as a result of the pitch of the helical cam track 133A.

The beaded edge holding wall 128 comprises a conical lower part 134 and an upper part 135 having a substantially uniform diameter 136. The conical lower part 134 has a tapering angle (α) of between 1 and 10 degrees.

The conical lower part 134 goes over in the upper part 135. The conical lower part acts 134 as a guide for guiding the cover 14 into the upper part 135 and toward the central support surface 126. The conical lower part 134 is constructed for gradually deforming the skirt 76 by pressing the beaded edge 80 inwardly during the movement of the cover into the cavity 124 and toward the central support surface 126.

The upper part 135 has a diameter 138 which is slightly smaller than the diameter of the cover 14 in a non-deformed state, i.e. prior to being deformed.

The deformer 110 is integral with a base section 140 of the lower part 101. The cup part holder 104 is movable within the deformer 110 and relative to said base section 140 in the direction 114 of the main axis 108. The cup part holder 104 is connected to the base section 140 via a sliding coupling 142 and a spring 144. The cup part holder 104 is movable against the action of the spring from the first position to the second position.

The top part 102 comprises an ejection mechanism 146 operable by an operating member 148 which may be a button. The ejection mechanism 146 comprises an ejection member 150 which is movable relative to the circumferential cover holding wall in the direction 152 of the main axis 108 by the operating member 148. The ejection member 150 is constructed to eject the coffee cup from the top part 102 after the cover has been secured onto the cup part.

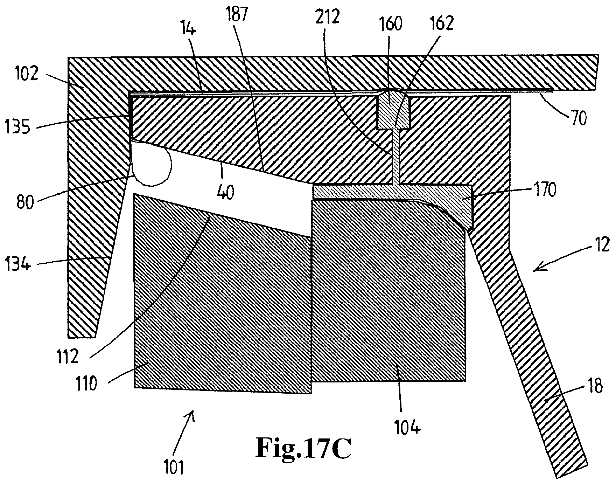

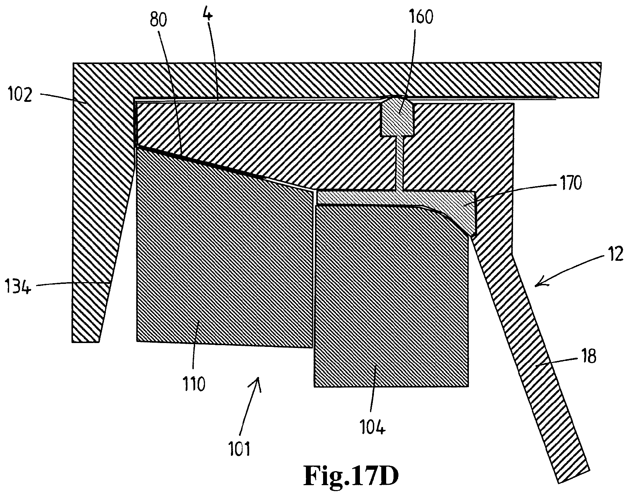

Turning to figures 17A, 17B, 17C and 17D, the primary steps for securing the cover onto the cup part are shown. Some parts of the device 100, the cup part 12 and the cover 14 are omitted in order to keep the figures simple.

Figure 17A shows a cover 14 on a cup part 12 which is positioned in the cup part holder of the device 100 for securing the cover 14 on the cup part 12.

Turning to figure 17B, the same situation is shown in a more diagrammatic way. The cover 14 is shown on the cup part 12. The cup part will be filled with ground coffee. The first sealing ring 160 is shown which has a base part 162 which extends in the groove 34 in the upper surface 36 of the cup part. An upper part 164 of the first sealing ring 160 extends above the upper surface 36. The upper part 164 may have a convex upper surface.

The second sealing ring 170 is shown which extends in the recess 38 of the cup part. The second sealing ring 170 protrudes from said recess and contacts both the underside 40 of the flange 26 and the circumferential side wall 18. The second sealing ring 170 defines an annular abutment surface 171 configured to engage an annular support ridge 106 of a device 100 for securing the cover 14 on the cup part 12. The second sealing ring 170 extends to the transition 188 between the horizontal part of the underside and the conical part of the underside. The outer diameter of the second sealing ring is substantially the same as the diameter of the circular transition 188.

A channel 212 is shown which interconnects the first sealing ring 160 and the second sealing ring 170. The channel 212 facilitates the injection moulding process with which the cup part is made. This is a multiple short (or 2-shot) injection moulding process and allows liquid material for the sealing rings to flow through the channel during the injection moulding. The channels extend parallel to the main axis 20. Multiple channels 212 may be present. The sealing rings can be manufactured from the same material.

Turning to figure 17C, in the first deforming step the top part 102 moves downward onto the lower part 101, thereby pressing the beaded edge 80 inward. The skirt is folded around the outer edge 30 of the flange 26.

Turning to figure 17D, in the second deforming step the top part and the lower part are rotated relative to one another and move toward one another as a result of the helical cam track and cam. The annular deforming ridge 112 is firmly pressed against the underside 40 of the flange. The beaded edge is flattened between the annular deforming ridge and the underside of the flange. A secure connection is formed.

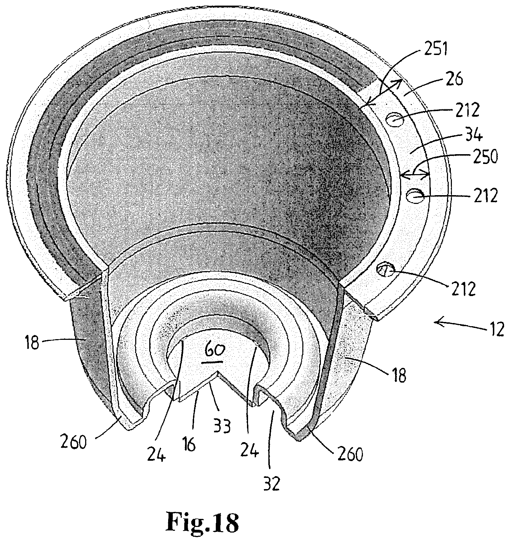

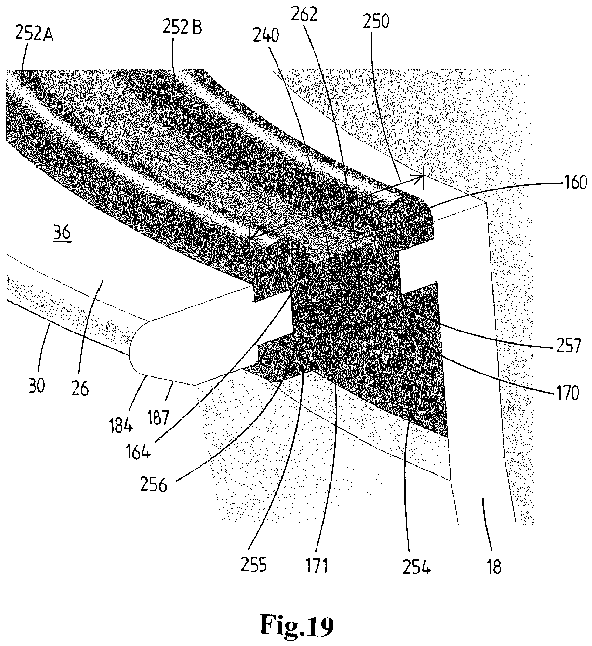

Turning to figures 18 and 19, a further variant is shown of the cup part 12. In this embodiment, the first sealing ring 160 has a slightly different shape. The base part 162 of the first sealing ring is relatively wide and has a width 250 which is 40-60 percent of a total width 251 of the flange.

The upper part 164 comprises two upstanding ridges 252A, 252B. It was found that this creates a better sealing effect. The upstanding ridges 252A, 252B have a convex upper surface.

The shape of the second sealing ring 170 is also slightly different. The annular abutment surface 171 has a conical part 254 and a transverse part 255 which extends transverse to a main axis of the cup part 12. A width of the transverse part is smaller in comparison with the width of the conical part than in the previous embodiments. The width 256 of the transverse part is smaller than the width 257 of the conical part 254. The conical part extends at an angle 258 of 30-60 degrees relative to the side wall 18 at the conical part. The second sealing ring 170 has a substantially same width 250 as the first sealing ring 160.

The channels 212 have a greater diameter 262 than in the previous embodiment. The channels may have a diameter which is 30 - 90 percent of a width 250 of the first sealing ring. It was found that this improves the production of the sealing ring in an injection-compression method. There may be 10-20 channels 212.

The first and second sealing ring are interconnected via channel parts 240 which extend through the channels 212 and are integral with one another via said channel parts 240.

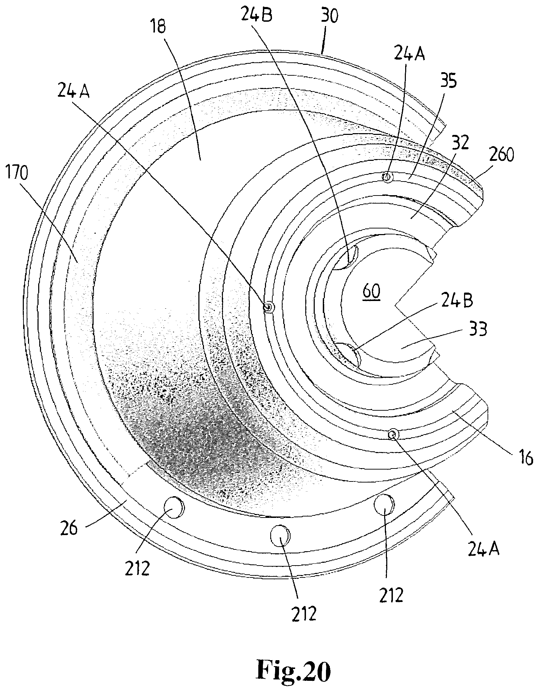

Turning to figure 20, the bottom wall 33 is also slightly different. The number of holes 24 is eight and may lie between 4-10. It was found that this reduced number of holes is sufficient for a proper ingress of the water into the cup. Four holes 24A, also referred to as outer holes, are located at equidistant intervals in the outer part 35 of the bottom wall (three holes 24A are shown as a result of the cut out part)

Four holes 24B, also referred to as inner holes) are located at equidistant intervals at the circumference of the protruding part 33 (two holes 24B are shown fully and two holes 24B are shown partially as a result of the cut-out part). The outer holes 24A and inner holes 24B are generally referred to as holes 24. The inner holes 24B are angularly offset over 45 degrees with respect to the outer holes 25A about the main axis of the cup part.

The groove 32 in the bottom wall has a slightly rounded shape at the bottom of the groove and at the top.

The side wall 18 has a conical part 260 near the bottom.

The method of making a do-it-yourself coffee cup comprises:
- providing the device 100 for securing a cover 14 on a cup part 12 of a coffee cup according to claim 14,
- providing the kit-of parts of a cup part 12 and a separate cover 14 according to claim 1,
- filling the cup part 12 with ground coffee,
- positioning the cup part in the cup part holder 104,
- positioning the cover on the cup part 12,
- positioning the top part 102 onto the bottom part 101 and deforming the cover in a first deforming step, wherein the skirt 76 is bent around an outer edge 30 of the flange and the beaded edge 80 is moved inwardly toward the main axis and underneath the flange,
- deforming the cover in a second deforming step, wherein the annular deforming ridge 112 is pressed against the underside 40 of the flange, wherein the beaded edge is flattened against the underside of the flange of the cup part, wherein the beaded edge holding wall prevents the beaded edge from moving outwardly, and wherein the cover is secured onto the cup part.

The cover is secured onto the cup part without the use of any glue or adhesive tape or separate filter paper. This allows the fast and simple process being executed by a consumer.

The result of the forming method is a completed coffee cup 200 comprising a cup part 12 and a cover 14 which is secured onto the cup part. The coffee cup 200 comprises a skirt 76 extending downwardly from the circumference of the central portion. The skirt is bent around the outer edge 30 of the flange. The circular beaded edge 80 is flattened against the underside of the flange and forms a secure connection with the cup part.

The coffee cup is used in combination with a hot fluid under pressure which is injected into the cup and extracts the coffee under pressure.

The coffee cups provided by the present invention have the general advantages of coffee cups, namely: hygiene, good keeping of the coffee, ease of use, better control of the quality of the coffee obtained and good reproducibility of the extraction conditions.

The skilled person will understand that the connection between the cup part 12 and the cover 14 is different from many known cups in which the cup part is folded around the cover, instead of the cover being folded around the cup part as is performed in the present invention.

## Claims

1. Cover (14) for a coffee cup, the cover comprising:
- a substantially flat circular central portion (70) configured to engage an upper surface (36) of a cup part of a coffee cup and to cover an upper opening of said coffee cup, the cover being configured for tearing when the coffee cup is being filled with fluid under pressure,
- a skirt (76) extending downwardly from the circumference of the central portion, the skirt having a skirt length, wherein the skirt length is larger than the thickness (31) of the outer edge of the flange, the skirt being configured to be bent around the outer edge of the flange,
**characterised in that** it further comprises:
- a circular beaded edge (80) defining the end of the skirt, wherein the beaded edge of the cover extends outwardly from the skirt over a distance and does not extend inwardly from the skirt, thereby providing free access of the upper surface (36) of the cup part to engage an underside (72) of the central portion of the cover including the corner of the central portion where the central portion meets the skirt, the beaded edge being configured to be deformed against an underside (40) of the flange of the cup part in order to secure the cover onto the cup part and form the coffee cup.

2. Cover of claim 1, wherein the cover is manufactured from a single circular piece (90) of aluminium sheet material, in particular without any additional parts or materials, wherein the skirt is formed by bending said circular piece along a circular bending line (88), and wherein the beaded edge is formed by an outer zone (94) of said circular piece being rolled onto itself, wherein the rolling and the bending have an opposite curvature.

3. Cover of claim 1 or 2, wherein the piece has a diameter of 45 - 55 mm, wherein the outer zone (94) has a width (95) of 2 - 5 mm.

4. Kit-of-parts of a cup part (12) and a separate cover (14) according to claim 1, which together form a coffee cup, the cup part (12) comprising:
- a bottom wall (16) and a circumferential side wall (18) in the form of a truncated cone which defines a main axis (20), the circumferential side wall extending from the bottom wall, the bottom wall and the circumferential side wall defining a volume (V) for holding ground coffee, the cup part having an upper opening (22), the bottom wall being provided with a plurality of holes (24) via which a hot fluid under pressure can enter the coffee cup,
- a circular flange (26) extending outwardly from an upper end of the side wall, the flange having an outer edge (30) which has a thickness (31),
- a circular sealing ring (160) of a resilient sealing material which extends around the upper opening and protrudes over a distance above an upper surface of the cup part, the sealing ring being configured to form a seal between the cover and the cup part when the cover and the cup part are joined together, (14) wherein the cup part and the cover are separate items, allowing the cup part to be filled by a user prior to the securing of the cover onto the cup part.

5. Kit-of-parts of claim 4, wherein the cover is manufactured from a single circular piece (90) of aluminium sheet material, in particular without any additional parts or materials, wherein the skirt is formed by bending said circular piece along a circular bending line (88), and wherein the beaded edge is formed by an outer zone (94) of said circular piece being rolled onto itself, wherein the rolling and the bending have an opposite curvature.

6. Kit-of-parts of any of claims 4-5, wherein the first sealing ring and the second sealing ring are interconnected via channels (212) which extend through the cup part (12), wherein said channels are filled with the same resilient material as the material of the first sealing ring and the second sealing ring.

7. Kit-of-parts of any of claims 4-6 wherein the cover is manufactured from a piece of aluminium sheet material and the cup part is manufactured from plastic.

8. Kit-of-parts of any of claims 4-7, wherein the skirt extends substantially perpendicular to the central portion (70) of the cover.

9. Kit-of-parts of any of claims 4-8, wherein the beaded edge has a diameter (84) of 0.6 - 1.2 mm.

10. Kit-of-parts of any of claims 4-9, wherein the cup part and the cover are constructed and arranged to be joined by the device of claim 8 after being filled with coffee.

11. Device (100) for securing the cover (14) of the kit-of parts according to any of claims 4-10 on the cup part (12) of said kit-of-parts, the device comprising a lower part (101) and a top part (102) which are movable relative to one another, the lower part comprising:
- a cup part holder (104) configured for holding a cup part (12), the cup part holder having an annular support ridge (106) being configured to abut an underside of a flange of the cup part, in particular an annular abutment surface (171) defined by a second sealing ring (170) of the cup part, the cup part holder defining a main axis (108),
- a deformer (110) for deforming a beaded edge of a cover in a second deforming step, the deformer comprising an annular deforming ridge (112) which when viewed in the direction of the main axis (108) extends around the annular support ridge (106) and is coaxial with said annular support ridge,
wherein the cup part holder is movable relative to the deformer in the direction of the main axis from a first position to a second position, the second position being the flattening position, wherein in the first position the annular support ridge (106) is located at a distance (120) above the annular deforming ridge (112), and wherein in the second position the annular support ridge (106) is substantially flush with the annular deforming ridge, wherein in the second position the annular deforming ridge bears a force exerted on the cover by the top part,
wherein the top part (102) is constructed to be positioned on the lower part (101) and over a cover after a cup part filled with coffee is positioned in the cup part holder (104) and after the cover is positioned on the cup part (12), the top part comprising a cover holder (122) defining a cavity (124) and the main axis (108),
wherein the device (100) further comprises a force mechanism (132) for forcefully pressing the top part against the cup part and the cover which are supported by the lower part, thereby moving the cup part holder (104) relative to the deformer (110) and pressing the annular deforming ridge (112) against the underside of the flange of the cup part, flattening the beaded edge which is present between the annular deforming ridge and the flange and securing the cover onto the cup part,
said device (100) being **characterised by** the cover holder comprising a circular central support surface (126) and a circumferential beaded edge holding wall (128) which extends downwards from the circular central support surface over a holding distance (130),
wherein the beaded edge holding wall is configured to be positioned around the cover (14) which is positioned on the upper surface (36) of a cup part which is positioned in the cup part holder,
wherein the beaded edge holding wall is configured to deform the cover in a first deforming step by bending the skirt of the cover inwardly toward the main axis (108) around the outer edge of the flange, the beaded edge being bent inwardly to a position underneath the flange of the cup part, the beaded edge holding wall being configured for preventing the beaded edge from moving back outwardly during the second deforming step.

12. Device according to the preceding device claim, wherein the beaded edge holding wall (128) comprises a conical lower part (134) and an upper part (135) having a substantially uniform diameter (138), the conical lower part having a tapering angle (α) of between 1 and 30 degrees and going over in the upper part wherein the conical lower part acts as a guide for guiding the cover into the upper part and toward the central support surface, the conical lower part being constructed for gradually deforming the skirt by pressing the beaded edge inwardly during the movement of the cover into the cavity and toward the central support surface.

13. Device according to any of the preceding device claims, wherein the device is a hand held device, the lower part being configured to be held by one hand of a user and the top part being configured to be held by the other hand of the user.

14. Method of making a completed coffee cup, the method being **characterised by** comprising:
- providing the device according to any of claims 11-13 for securing a cover (14) on a cup part (12) of a coffee cup (200),
- providing the kit-of parts of a cup part (12) and a separate cover (14) according to any of claims 4-10,
- filling the cup part (14) with coffee,
- positioning the cup part in the cup part holder (12),
- positioning the cover on the cup part (12),
- positioning the top part onto the bottom part and deforming the cover in a first deforming step, wherein the skirt is bent around an outer edge (30) of the flange and the beaded edge (80) is moved inwardly toward the main axis and underneath the flange,
- deforming the cover in a second deforming step, wherein the annular deforming ridge is pressed against the underside of the flange, wherein the beaded edge is flattened against the underside of the flange of the cup part, wherein the beaded edge holding wall prevents the beaded edge from moving outwardly, and wherein the cover is secured onto the cup part (12).

15. Method according to claim 14, wherein the cover is secured onto the cup part without the use of any glue or adhesive tape or separate filter paper.

## Patentansprüche

1. Abdeckung (14) für einen Kaffeebecher, wobei die Abdeckung das Folgende umfasst:
- einen im Wesentlichen flachen kreisförmigen zentralen Teil (70), der konfiguriert ist, um an einer oberen Oberfläche (36) von einem Becherteil eines Kaffeebecher anzugreifen und um eine obere Öffnung des Kaffeebechers abzudecken, wobei die Abdeckung konfiguriert ist zu reißen, wenn der Kaffeebecher mit unter Druck gesetztem Fluid befüllt wird,
- eine Schürze (76), die sich von dem Umfang des zentralen Teils aus nach unten erstreckt, wobei die Schürze eine Schürzenlänge aufweist, wobei die Schürzenlänge größer als die Dicke (31) des äußeren Rands von dem Flansch ist, wobei die Schürze konfiguriert ist, um um den äußeren Rand des Flansches gebogen zu werden,
**dadurch gekennzeichnet, dass** sie ferner das Folgende umfasst:
- einen kreisförmigen verwulsteten Rand (80), der das Ende der Schürze definiert, wobei sich der verwulstete Rand der Abdeckung von der Schürze aus über einen Abstand nach außen erstreckt und sich nicht von der Schürze aus nach innen erstreckt, wodurch ein freier Zugang zu der oberen Oberfläche (36) des Becherteils bereitgestellt wird, um an einer Unterseite (72) des zentralen Teils der Abdeckung einzugreifen, einschließlich des Rands von dem zentralen Teil, an dem der zentrale Teil auf die Schürze trifft, wobei der verwulstete Rand konfiguriert ist, um gegen eine Unterseite (40) von dem Flansch des Becherteils verformt zu werden, um die Abdeckung auf dem Becherteil zu sichern und den Kaffeebecher auszubilden.

2. Abdeckung nach Anspruch 1, wobei die Abdeckung aus einem einzigen kreisförmigen Stück (90) Aluminiumblechmaterial hergestellt ist, insbesondere ohne irgendwelche zusätzlichen Teile oder Materialien, wobei die Schürze gebildet wird, indem das kreisförmige Stück entlang einer kreisförmigen Biegelinie (88) ausgebildet wird, und wobei der verwulstete Rand gebildet wird, indem eine äußere Zone (94) von dem kreisförmigen Stück auf sich selbst aufgerollt wird, wobei das Aufrollen und das Biegen eine entgegengesetzte Krümmung aufweisen.

3. Abdeckung nach Anspruch 1 oder 2, wobei das Stück einen Durchmesser von 45 - 55 mm aufweist, wobei die äußere Zone (94) eine Breite (95) von 2 - 5 mm aufweist.

4. Kit-of-parts aus einem Becherteil (12) und einer separaten Abdeckung (14) nach Anspruch 1, die zusammen einen Kaffeebecher bilden, wobei der Becherteil (12) das Folgende umfasst:
- eine Bodenwand (16) und eine umlaufende Seitenwand (18) in der Form eines Kegelstumpfs, der eine Hauptachse (20) definiert, wobei sich die umlaufende Seitenwand von der Bodenwand aus erstreckt, wobei die Bodenwand und die umlaufende Seitenwand ein Volumen (V) zum Halten von gemahlenem Kaffee definieren, wobei der Becherteil eine obere Öffnung (22) aufweist, wobei die Bodenwand mit einer Vielzahl von Löchern (24) versehen ist, über die ein unter Druck gesetztes heißes Fluid in den Kaffeebecher eintreten kann,
- einen kreisförmigen Flansch (26), der sich von einem oberen Ende der Seitenwand aus nach außen erstreckt, wobei der Flansch einen äußeren Rand (30) aufweist, der eine Dicke (31) aufweist,
- einen kreisförmigen Dichtring (116) aus einem elastischen Dichtmaterial, der sich um die obere Öffnung erstreckt und über einen Abstand über eine obere Oberfläche von dem Becherteil hervorsteht, wobei der Dichtring konfiguriert ist, um eine Dichtung zwischen der Abdeckung und dem Becherteil auszubilden, wenn die Abdeckung und der Becherteil miteinander verbunden werden, 14
wobei der Becherteil und die Abdeckung separate Gegenstände sind, wodurch es möglich ist, dass der Becherteil durch einen Benutzer befüllt wird, bevor die Abdeckung auf dem Becherteil gesichert wird.

5. Kit-of-parts nach Anspruch 4, wobei die Abdeckung aus einem einzigen kreisförmigen Stück (90) Aluminiumblechmaterial hergestellt ist, insbesondere ohne irgendwelche zusätzlichen Teile oder Materialien, wobei die Schürze gebildet wird, indem das kreisförmige Stück entlang einer kreisförmigen Biegelinie (88) ausgebildet wird, und wobei der verwulstete Rand gebildet wird, indem eine äußere Zone (94) von dem kreisförmigen Stück auf sich selbst aufgerollt wird, wobei das Aufrollen und das Biegen eine entgegengesetzte Krümmung aufweisen.

6. Kit-of-parts nach Anspruch 4-5, wobei der erste Dichtring und der zweite Dichtring über Kanäle (212) miteinander verbunden sind, die sich durch den Becherteil (12) erstrecken, wobei die Kanäle mit demselben elastischen Material gefüllt sind wie das Material des ersten Dichtrings und des zweiten Dichtrings.

7. Kit-of-parts nach Anspruch 4-6, wobei die Abdeckung aus einem Stück Aluminiumblechmaterial und der Becherteil aus Plastik hergestellt ist.

8. Kit-of-parts nach Anspruch 4-7, wobei sich die Schürze im Wesentlichen rechtwinklig zu dem zentralen Teil (70) der Abdeckung erstreckt.

9. Kit-of-parts nach Anspruch 4-8, wobei der verwulstete Rand einen Durchmesser (84) von 0,6 - 1,2 mm aufweist.

10. Kit-of-parts nach Anspruch 4-9, wobei der Becherteil und die Abdeckung konstruiert und angeordnet sind, um nach dem Befüllen mit Kaffee durch die Vorrichtung nach Anspruch 8 verbunden zu werden.

11. Vorrichtung (100) zum Sichern der Abdeckung (14) des Kit-of-parts nach einem der Ansprüche 4-10 auf dem Becherteil (12) des Kit-of-parts, wobei die Vorrichtung einen Unterteil (101) und einen Oberteil (102) umfasst, die relativ zueinander bewegbar sind, wobei der Unterteil das Folgende umfasst:
- einen Becherteilhalter (104), der konfiguriert ist, um einen Becherteil (12) zu halten, wobei der Becherteilhalter einen ringförmigen Stützgrat (106) aufweist, der konfiguriert ist, um an einer Unterseite von einem Flansch des Becherteils anzugrenzen, insbesondere eine ringförmige Anschlagfläche (171), die durch einen zweiten Dichtring (170) des Becherteils definiert wird, wobei der Becherteilhalter eine Hauptachse (108) definiert,
- einen Verformer (110) zum Verformen von einem verwulsteten Rand einer Abdeckung in einem zweiten Verformungsschritt, wobei der Verformer einen ringförmigen Verformungsgrat (112) umfasst, der sich, wenn er in Richtung der Hauptachse (108) betrachtet wird, um den ringförmigen Stützgrat (106) erstreckt und koaxial mit dem ringförmigen Stützgrat verläuft,
wobei der Becherhalterteil relativ zu dem Verformer in Richtung der Hauptachse von einer ersten Position zu einer zweiten Position bewegbar ist, wobei die zweite Position die Abplattposition ist, wobei in der ersten Position der ringförmige Stützgrat (106) in einem Abstand (120) zu dem ringförmigen Verformungsgrat (112) angeordnet ist, und wobei in der zweiten Position der ringförmige Stützgrat (106) im Wesentlichen bündig mit dem ringförmigen Verformungsgrat ist, wobei in der zweiten Position der ringförmige Verformungsgrat eine Kraft aufnimmt, die durch den Oberteil auf die Abdeckung ausgeübt wird,
wobei der Oberteil (102) konstruiert ist, um auf dem Unterteil (101) und über einer Abdeckung positioniert zu sein, nachdem ein Becherteil, der mit Kaffee gefüllt ist, in dem Becherteilhalter (104) positioniert worden ist und nachdem die Abdeckung auf dem Becherteil (12) positioniert worden ist, wobei der Oberteil einen Abdeckungshalter (122) umfasst, der eine Aushöhlung (124) und die Hauptachse (108) definiert,
wobei die Vorrichtung (100) ferner einen Kraftmechanismus (132) umfasst, um den Oberteil kraftvoll gegen den Becherteil und die Abdeckung, gestützt durch den Unterteil, zu drücken, wodurch der Becherteilhalter (104) relativ zu dem Verformer (110) bewegt wird und der ringförmige Verformungs-grat (112) gegen die Unterseite des Flansches des Becherteils gedrückt wird, der verwulstete Rand, welcher sich zwischen dem ringförmigen Verformungsgrat und dem Flansch befindet, abgeplattet wird und die Abdeckung auf dem Becherteil gesichert wird,
wobei die Vorrichtung (100) **dadurch gekennzeichnet ist, dass**
der Abdeckungshalter eine kreisförmige zentrale Stützoberfläche (126) und eine umlaufende verwulstete Randhaltewand (128) umfasst, die sich von der kreisförmigen zentralen Stützoberfläche aus über einen Halteabstand (130) nach unten erstreckt,
wobei die verwulstete Randhaltewand konfiguriert ist, um um die Abdeckung (14) positioniert zu werden, welche auf der oberen Oberfläche (36) eines Becherteils positioniert ist, welcher in dem Becherteilhalter positioniert ist,
wobei die verwulstete Randhaltewand konfiguriert ist, um in einem ersten Verformungsschritt die Abdeckung zu verformen, indem die Schürze der Abdeckung in Richtung der Hauptachse (108) nach innen und um den äußeren Rand des Flansches gebogen wird, wobei der verwulstete Rand hin zu einer Position unter den Flansch des Becherteils nach innen gebogen wird, wobei die verwulstete Randhaltewand konfiguriert ist, um den verwulsteten Rand daran zu hindern, sich während des zweiten Verformungsschritts zurück nach außen zu bewegen.

12. Vorrichtung nach dem vorhergehenden Vorrichtungsanspruch, wobei die verwulstete Randhaltewand (128) einen konischen unteren Teil (134) und einen oberen Teil (135), der einen im Wesentlichen einheitlichen Durchmesser (138) aufweist, umfasst, wobei der konische untere Teil einen Verjüngungswinkel (α) zwischen 1 und 30 Grad aufweist und in den oberen Teil übergeht, wobei der konische untere Teil als eine Führung wirkt, um die Abdeckung in den oberen Teil und in Richtung der zentralen Stützoberfläche zu führen, wobei der konische untere Teil für eine graduelle Verformung der Schürze konstruiert ist, indem der verwulstete Rand während der Bewegung der Abdeckung in die Aushöhlung und in Richtung der zentralen Stützoberfläche nach innen gedrückt wird.

13. Vorrichtung nach einem der vorhergehenden Vorrichtungsansprüche, wobei die Vorrichtung eine handgehaltene Vorrichtung ist, wobei der untere Teil konfiguriert ist, um durch die eine Hand eines Benutzers gehalten zu werden, und der obere Teil konfiguriert ist, um durch die andere Hand des Benutzers gehalten zu werden.

14. Verfahren zum Herstellen eines vollständigen Kaffeebechers, wobei das Verfahren **dadurch gekennzeichnet ist, dass** es das Folgende umfasst:
- Bereitstellen von der Vorrichtung nach einem der Ansprüche 11-13 zum Sichern einer Abdeckung (14) auf einem Becherteil (12) von einem Kaffeebecher (200),
- Bereitstellen von dem Kit-of-parts aus einem Becherteil (12) und einer separaten Abdeckung (14) nach einem der Ansprüche 4-10,
- Befüllen von dem Becherteil (14) mit Kaffee,
- Positionieren von dem Becherteil in dem Becherteilhalter (12),
- Positionieren von der Abdeckung auf dem Becherteil (12),
- Positionieren von dem Oberteil auf dem Unterteil und Verformen von der Abdeckung in einem ersten Verformungsschritt, wobei die Schürze um einen äußeren Rand (30) des Flansches gebogen wird und der verwulstete Rand (80) in Richtung zur Hauptachse nach innen und unter den Flansch bewegt wird,
- Verformen von der Abdeckung in einem zweiten Verformungsschritt, wobei der ringförmige Verformungsgrat gegen die Unterseite des Flansches gedrückt wird, wobei der verwulstete Rand gegen die Unterseite des Flansches des Becherteils abgeplattet wird, wobei die verwulstete Randhaltewand den verwulsteten Rand daran hindert, sich nach außen zu bewegen, und wobei die Abdeckung auf dem Becherteil (12) gesichert wird.

15. Verfahren nach Anspruch 14, wobei die Abdeckung auf dem Becherteil ohne die Verwendung jeglichen Klebstoffs oder Haftbandes oder separaten Filterpapiers gesichert wird.

## Revendications

1. Couvercle (14) pour une capsule à café, le couvercle comprenant:
- une partie centrale (70) circulaire sensiblement plate configurée pour coopérer avec une surface supérieure (36) d'une partie capsule d'une capsule à café et pour recouvrir une ouverture supérieure de ladite capsule à café, le couvercle étant configuré pour se déchirer lorsque la capsule à café est remplie d'un fluide sous pression,
- une jupe (76) s'étendant vers le bas à partir de la circonférence de la partie centrale, la jupe ayant une longueur de jupe, la longueur de jupe étant plus grande que l'épaisseur (31) du bord extérieur de la bride, la jupe étant configurée pour être courbée autour du bord extérieur de la bride,
**caractérisé en ce qu'**il comprend en outre :
- un bourrelet de bordure circulaire (80) définissant l'extrémité de la jupe, dans lequel le bourrelet de bordure du couvercle s'étend vers l'extérieur à partir de la jupe sur une distance et ne s'étend pas vers l'intérieur de la jupe, permettant ainsi un accès libre à la surface supérieure (36) de la partie capsule pour coopérer avec une face inférieure (72) de la partie centrale du couvercle incluant le coin de la partie centrale où la partie centrale rencontre la jupe, le bourrelet de bordure étant configuré pour se déformer contre une face inférieure (40) de la bride de la partie capsule afin de fixer le couvercle sur la partie capsule et former la capsule à café.

2. Le couvercle selon la revendication 1, dans lequel le couvercle est fabriqué à partir d'une seule pièce circulaire (90) en feuille d'aluminium, en particulier sans pièces ou matériaux supplémentaires, dans lequel la jupe est formée en pliant ladite pièce circulaire le long d'une ligne de pliage circulaire (88), et dans lequel le bourrelet de bordure est formé par une zone externe (94) de ladite pièce circulaire enroulée sur elle-même, dans lequel l'enroulement et le pliage ont une courbure opposée.

3. Le couvercle selon la revendication 1 ou 2, dans lequel la pièce a un diamètre de 45 à 55 mm, dans lequel la zone extérieure (94) a une largeur (95) de 2 à 5 mm.

4. Kit de pièces d'une partie capsule (12) et d'un couvercle séparé (14) selon la revendication (1) qui forment ensemble une capsule à café, la partie capsule (12) comprenant:
- une paroi inférieure (16) et une paroi latérale circonférentielle (18) sous la forme d'un cône tronqué qui définit un axe principal (20), la paroi latérale circonférentielle s'étendant à partir de la paroi inférieure, la paroi inférieure et la paroi latérale circonférentielle définissant un volume (V) pour contenir du café moulu, la partie capsule ayant une ouverture supérieure (22), la paroi inférieure étant pourvue d'une pluralité de trous (24) par lesquels un fluide chaud sous pression peut pénétrer la capsule à café,
- une bride circulaire (26) s'étendant vers l'extérieur à partir d'une extrémité supérieure de la paroi latérale, la bride ayant un bord extérieur (30) qui a une épaisseur (31),
- une bague d'étanchéité circulaire (160) en un matériau d'étanchéité élastique qui s'étend autour de l'ouverture supérieure et fait saillie sur une distance au-dessus d'une surface supérieure de la partie capsule, la bague d'étanchéité étant configurée pour former un joint entre le couvercle et la partie capsule lorsque le couvercle et la partie capsule sont joints ensemble,
dans lequel la partie capsule et le couvercle sont des articles séparés, permettant à un utilisateur de remplir la partie capsule avant la fixation du couvercle sur la partie capsule.

5. Kit de pièces selon la revendication 4, dans lequel le couvercle est fabriqué à partir d'une seule pièce circulaire (90) en feuille d'aluminium, en particulier sans pièces ou matériaux supplémentaires, dans lequel la jupe est formée en pliant ladite pièce circulaire le long d'une ligne de pliage circulaire (88), et dans lequel le bourrelet de bordure est formé par une zone externe (94) de ladite pièce circulaire enroulée sur elle-même, dans lequel l'enroulement et le pliage une courbure opposée.

6. Kit de pièces selon l'une quelconque des revendications 4 à 5, dans lequel la première bague d'étanchéité et la seconde bague d'étanchéité sont interconnectées par des canaux (212) qui s'étendent à travers la partie capsule (12), dans lequel lesdits canaux sont remplis du même matériau élastique que le matériau de la première bague d'étanchéité et de la seconde bague d'étanchéité.

7. Kit de pièces selon l'une quelconque des revendications 4 à 6, dans lequel le couvercle est fabriqué à partir d'une pièce de matériau en feuille d'aluminium et la partie capsule est fabriquée à partir de plastique.

8. Kit de pièces selon l'une quelconque des revendications 4 à 7, dans lequel la jupe s'étend sensiblement perpendiculairement à la partie centrale (70) du couvercle.

9. Kit de pièces selon l'une quelconque des revendications 4 à 8, dans lequel le bourrelet de bordure a un diamètre (84) de 0,6 à 1,2 mm.

10. Kit de pièces selon l'une quelconque des revendications 4 à 9, dans lequel la partie capsule et le couvercle sont conçus et agencés pour être assemblés par le dispositif de la revendication 8 après avoir été remplis de café.

11. Dispositif (100) pour fixer le couvercle (14) du kit de pièces selon l'une quelconque des revendications 4 à 10 sur la partie capsule (12) dudit kit de pièces, le dispositif comprenant une partie inférieure (101) et une partie supérieure (102) qui sont mobiles l'une par rapport à l'autre, la partie inférieure comprenant:
- un support (104) de partie capsule configuré pour supporter une partie capsule (12), le support de partie capsule ayant une nervure (106) de support annulaire configurée pour venir en butée contre une surface de dessous d'une bride de la partie capsule, en particulier une surface (171) de butée annulaire définie par une seconde bague d'étanchéité (170) de la partie capsule, le support de partie capsule définissant un axe principal (108),
- un déformateur (110) pour déformer un bourrelet de bordure d'un couvercle dans une seconde étape de déformation, le déformateur comprenant une nervure (112) de déformation annulaire qui, vue dans la direction de l'axe principal (108), s'étend autour de la nervure (106) de support annulaire et est coaxiale à ladite nervure de support annulaire,
dans lequel le support de partie capsule est mobile par rapport au déformateur dans la direction de l'axe principal d'une première position à une seconde position, la seconde position étant la position d'aplatissement, dans lequel, dans la première position, la nervure (106) de support annulaire est située à une distance (120) au-dessus de la nervure (112) de déformation annulaire, et dans lequel, dans la seconde position, la nervure (106) de support annulaire est sensiblement alignée avec la nervure de déformation annulaire, dans lequel, dans la seconde position, la nervure de déformation annulaire supporte une force exercée sur le couvercle par la partie supérieure,
dans lequel la partie supérieure (102) est conçue pour être positionnée sur la partie inférieure (101) et au-dessus d'un couvercle après qu'une partie capsule remplie de café ait été positionnée dans le support (104) de partie capsule et après que le couvercle ait été positionné sur la partie capsule (12), la partie supérieure comprenant un support (122) de couvercle définissant une cavité (124) et l'axe principal (108),
dans lequel le dispositif (100) comprend en outre un mécanisme (132) de force pour fortement presser la partie supérieure contre la partie capsule et le couvercle qui sont supportés par la partie inférieure, de sorte à déplacer le support (104) de partie capsule par rapport au déformateur (110) et à presser la nervure (112) de déformation annulaire contre la surface de dessous de la bride de la partie capsule, aplatissant le bourrelet de bordure qui est présent entre la nervure de déformation annulaire et la bride et fixant le couvercle sur la partie capsule,
ledit dispositif (100) étant **caractérisé par**
le support de couvercle comprenant une surface (126) de support centrale circulaire et une paroi (128) de maintien de bourrelet de bordure circonférentielle qui s'étend vers le bas à partir de la surface de support centrale circulaire sur une distance (130) de maintien,
dans lequel la paroi de maintien de bourrelet de bordure est configurée pour être positionnée autour du couvercle (14) qui est positionné sur la surface supérieure (36) d'une partie capsule qui est positionnée dans le support de partie capsule,
dans lequel la paroi de maintien de bourrelet de bordure est configurée pour déformer le couvercle dans une première étape de déformation en pliant la jupe du couvercle vers l'intérieur en direction de l'axe principal (108) autour du bord extérieur de la bride, le bourrelet de bordure étant plié vers l'intérieur jusqu'à une position sous la bride de la partie capsule, la paroi de maintien de bourrelet de bordure étant configurée pour empêcher le bourrelet de bordure de revenir en arrière vers l'extérieur pendant la seconde étape de déformation.

12. Le dispositif selon la revendication de dispositif précédente, dans lequel la paroi (128) de maintien de bourrelet de bordure comprend une partie (134) inférieure conique et une partie (135) supérieure ayant un diamètre sensiblement uniforme (138), la partie inférieure conique ayant un angle de conicité (α) compris entre 1 et 30 degrés et se prolongeant dans la partie supérieure dans laquelle la partie inférieure conique sert de guide pour guider le couvercle dans la partie supérieure et vers la surface d'appui centrale, la partie inférieure conique étant conçue pour déformer progressivement la jupe en pressant le bourrelet de bordure vers l'intérieur pendant le mouvement du couvercle dans la cavité et vers la surface de support centrale.

13. Dispositif selon l'une quelconque des revendications de dispositif précédentes, dans lequel le dispositif est un dispositif portatif, la partie inférieure étant configurée pour être tenue par une main d'un utilisateur et la partie supérieure étant configurée pour être tenue par l'autre main de l'utilisateur.

14. Procédé de fabrication d'une capsule à café terminée, le procédé comprenant:
- fournir le dispositif selon l'une quelconque des revendications 11 à 13 pour fixer un couvercle (14) sur une partie capsule (12) d'une capsule à café (200),
- fournir un kit de pièces d'une partie capsule (12) et d'un couvercle séparée (14) selon l'une quelconque des revendications 4 à 10,
- remplir la partie capsule (14) avec du café,
- positionner la partie capsule dans le support de partie capsule (12),
- positionner le couvercle sur la partie capsule (12),
- positionner la partie supérieure sur la partie inférieure et déformer le couvercle dans une première étape de déformation, dans laquelle la jupe est courbée autour d'un bord externe (30) de la bride et le bourrelet de bordure (80) est déplacé vers l'intérieur en direction de l'axe principal et sous la bride,
- déformer le couvercle dans une seconde étape de déformation, dans laquelle la nervure de déformation annulaire est pressée contre la surface de dessous de la bride, dans laquelle le bourrelet de bordure est aplati contre la surface de dessous de la bride de la partie capsule, dans laquelle la paroi de maintien de bourrelet de bordure empêche le bourrelet de bordure de se déplacer vers l'extérieur, et dans laquelle le couvercle est fixé sur la partie capsule (12).

15. Le procédé selon la revendication 14, dans lequel le couvercle est fixé sur la partie capsule sans utiliser de colle ou de ruban adhésif ou de papier filtre séparé.
